# EUROPÄISCHE PATENTSCHRIFT

(11) **EP 1 356 889 B1**
(45) Veröffentlichungstag und Bekanntmachung des Hinweises auf die Patenterteilung: **30.03.2005**
(21) Anmeldenummer: 02009100.5
(22) Anmeldetag: 24.04.2002
(51) Int. Cl.: B23K 9/12

(54) **Schweissdrahtvorschubvorrichtung mit mindestens zwei durch ein Schneckengetriebe angetriebenen Rollen**
Welding wire feeding device comprising at least two rollers driven by a worm gear
Appareil d'avance de fil de soudage avec au moins deux rouleaux actionnés par un engrenage à vis sans fin

(43) Veröffentlichungstag der Anmeldung: 29.10.2003
(73) Patentinhaber: Mechafin AG, 8954 Geroldswil (CH)
(72) Erfinder: Hess, Andreas, 6208 Oberkirch (CH)
(74) Vertreter: Blum, Rudolf Emil Ernst

(56) Entgegenhaltungen:
- EP-A- 0 224 669
- WO-A-98/26895
- DE-A- 2 064 758
- GB-A- 1 463 004
- PATENT ABSTRACTS OF JAPAN vol. 005, no. 002 (M-049), 9. Januar 1981 (1981-01-09) & JP 55 136576 A (HITACHI SEIKO LTD), 24. Oktober 1980 (1980-10-24)

## Beschreibung

Die Erfindung bezieht sich auf eine Drahtvorschubvorrichtung für Drahtschweissanlagen gemäss Oberbegriff von Anspruch 1, wie sie z.B. in EP 0 224 669 beschrieben ist.

Drahtvorschubvorrichtungen, wie sie z.B. in WO 98/26895 beschrieben sind, werden beim Drahtschweissen verwendet, um den Schweissdraht von der Spule abzuwickeln und dem Schweissbrenner zuzuführen. Die Vorrichtungen besitzen mindestens ein Rollenpaar, zwischen welchem der Draht geführt und angetrieben wird. Die Vorrichtungen können auch zwei oder mehr Rollenpaare aufweisen, wobei mehr Rollenpaare zusammen eine grössere Vorschubkraft auf den Draht ausüben können. Die meisten Geräte sind mit zwei Rollenpaaren ausgerüstet. Je zwei der Rollen sind als Druckrollen ausgeführt, zwei als Antriebsrollen. Die Antriebsrollen sind mit einem Motor über Stirnräder und/oder Ritzel antriebsverbunden. In der Praxis erweisen sich die bisher verwendeten Vorschubvorrichtungen bei der Herstellung als teuer und im Einsatz als unpräzise, vibrationsverursachend und wartungsbedürftig. Insbesondere für den Einsatz auf Roboter-Armen erweisen sich die konventionellen Vorrichtungen wegen der von ihnen verursachten Vibrationen nur als bedingt geeignet. Vibrationen können zudem die Bildung von Rost begünstigen (Vibrationsrost). Der Schweissdaht sollte keine Oel- oder Fett-Spuren aufweisen. Aus diesem Grund dürfen die Vorrichtungen im Bereich des Schweissdrahtes nicht geölt werden, was bei der konventionellen Bauweise zu starkem Verschleiss und Abrieb führt, wobei der Abrieb, wenn er sich auf dem Schweissdraht festsetzt, die Schweissqualität beeinträchtigt.

Es stellt sich daher die Aufgabe, eine Vorrichtung der eingangs genannten Art bereitzustellen, die diese Nachteile mindestens teilweise vermeidet. Diese Aufgabe wird von Anspruch 1 gelöst, indem mindestens zwei angetriebene Rollen mit je einem Schneckenrad fest verbunden sind und auf einer Schneckenachse mindestens eine Schnecke angeordnet ist, wobei jedes der Schneckenräder mit der Schnecke oder gegebenenfalls einer der Schnecken in Kraftkontakt steht.

Dies hat den Vorteil, dass der Aufbau relativ einfach ist und mit wenig Teilen auskommt. Die Übersetzung und die Antriebsverteilung sind kombiniert. Die Herstellungskosten sind damit tiefer als bei bekannten Vorrichtungen. Die erfindungsgemässe Antriebsverteilung über eine Schnecke hat einen ruhigen Lauf. Zudem kann der Rollenabstand und die Zahl der Rollen ohne wesentliche Änderungen am Aufbau der Antriebsverteilung variiert werden. Dadurch ist es möglich ohne wesentlichen Konstruktionsund Produktionsaufwand Vorrichtungen mit verschieden grossen Rollen und/oder zusätzlichen Rollen herzustellen.

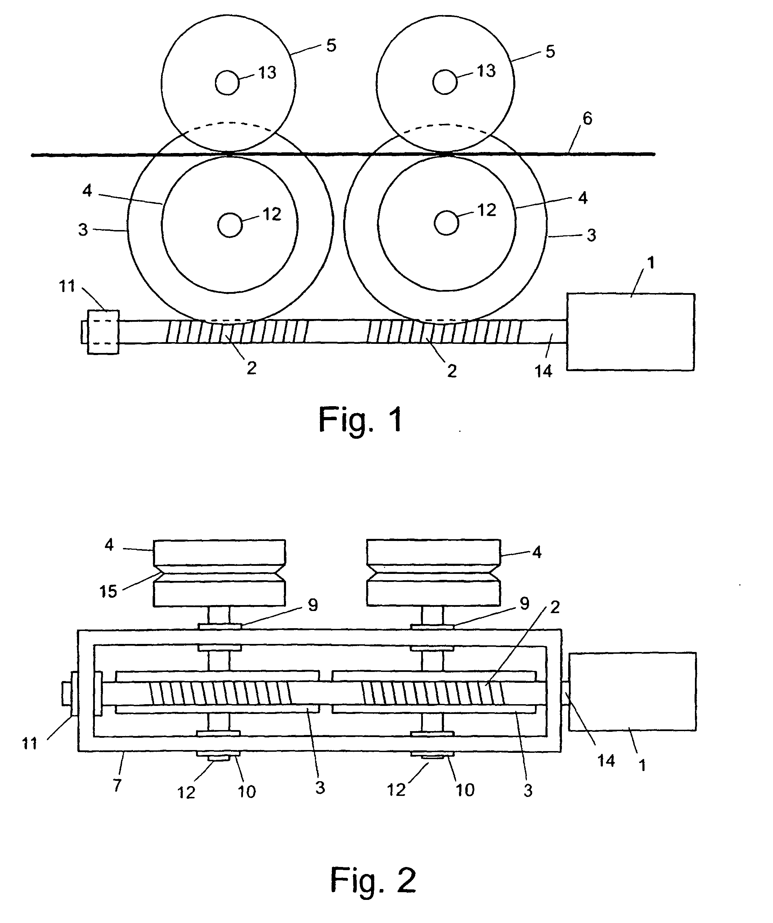

Weitere Vorteile und bevorzugte Ausführungsbeispiele ergeben sich aus den abhängigen Ansprüchen sowie aus der nun folgenden Beschreibung anhand der Figuren. Dabei zeigen:
Fig. 1 ein Schema einer Ausführungsform der erfindungsgemässen Drahtvorschubvorrichtung in einer Seitenansicht,
Fig. 2 die Vorrichtung aus Fig. 1 in einer Sicht von unten, mit Gehäuse, jedoch ohne Bodenplatte,
Fig. 3 eine Ausführungsform der erfindungsgemässen Vorrichtung mit einer von oben greifenden Schnekke,
Fig. 4 eine Ausführungsform der erfindungsgemässen Vorrichtung mit dem Motor zwischen zwei Schnecken,
Fig. 5 eine Ausführungsform der erfindungsgemässen Vorrichtung mit drei Antriebsrollen,
Eine mögliche Ausführung der erfindungsgemässen Vorrichtung ergibt sich aus Figuren 1 und 2. Ein Motor 1 treibt eine Schneckenachse 14 an. Die Schneckenachse 14 ist am dem Motor gegenüberliegenden Ende mit einem Lager 11 gelagert. Das Lager 11 ist vorzugsweise eine Bronzebüchse. Auf der Schneckenachse 14 befinden sich zwei Schnecken 2. Diese stehen mit Schneckenrädern 3 in Kraftkontakt. Die Schneckenräder 3 sind fest mit Rollenachsen 12 verbunden. Die Rollenachsen 12 sind in Lagern 9 und 10 gelagert. Die Lager 9 und 10 sind in der Wand eines Gehäuses 7 befestigt und sind vorzugsweise Kugellager. Das Gehäuse 7 ist nur in Fig. 2 gezeigt, und zwar zur besseren Einsicht ohne die zum Gehäuse gehörende Bodenplatte. Durch die Lagerung an zwei Punkten wird die Belastung der Rollenachsen 12 reduziert. Auf den Rollenachsen 12 sind die Vorschubrollen 4 befestigt. Die Vorschubrollen 4 weisen eine V-Nut 15 zur Führung des Schweissdrahtes 6 auf.

Die Lauf- bzw. Druckrollen 5 sind als freilaufende Rollen ohne eigenen Antrieb ausgestaltet. Sie werden von einem (nicht gezeigten) Schwenkmechanismus gegen den Draht 6 und die Antriebsrollen 4 gedrückt. Ein entsprechender Mechanismus ist in WO 98/26895 dargestellt.

Das Gehäuse 7 und die Lager 9, 10, 11 sind vorzugsweise so ausgestaltet, dass das Gehäuse 7 gegen aussen abgedichtet und insbesondere fest versiegelt ist. Es muss so nur in Ausnahmefällen bei der Wartung geöffnet werden.

Dies hat den Vorteil, dass auf das Schneckengetriebe aufgebrachte Schmiermittel nicht mit dem Schweissdraht 6 in Berührung kommen. Als Schmiermittel wird bevorzugt Fett verwendet. Bei den auftretenden Drehzahlen kommt es zu keiner starken Erwärmung, so dass keine Verflüssigung des Fettes zu Erwarten ist. Als Schmiermittel kann aber auch alternativ Öl verwendet werden. Bei der Schmierung mit Öl wird vorzugsweise ein Ölbad vorgesehen, in welches die Schneckenräder ca. 4mm tief eintauchen. Das mit Fett oder Öl geschmierte Getriebe ist sehr wartungsarm. Es gibt keine Rostbildung.

Die Unterbringung des Getriebes in einem Gehäuse hat zudem den Vorteil, dass Abrieb vom Getriebe nicht an den Schweissdraht 6 gelangt. Im Gegensatz zu einem Getriebe im Trockenlauf gibt es keinen feinen Abrieb, welcher besonders leicht auf dem Schweissdraht 6 hängen bleibt.

Ein weiterer Vorteil der Einkapselung des Getriebes besteht darin, dass die Vorrichtung für die Bedienperson sicherer wird. Dies ist insbesondere beim Einziehen des Drahtes und beim Auswechseln der Rollen von Vorteil. Die Rollenachsen 12 und Rollen 4, 5 sind insbesondere so ausgestaltet, dass die Rollen 4, 5 von der Bedienperson, d.h. nicht nur bei Herstellung und Wartung, ausgewechselt werden können. Dadurch ist es möglich Rollen 4, 5 mit einer an die jeweilige Drahtart angepassten Nut zu montieren. So sind z.B. für Stahldrähte bevorzugt Rollen mit V-Nut und für Aluminiumdrähte bevorzugt Rollen mit U-Nut zu montieren. Auch ein Abstimmen der Nut-Abmessungen auf den jeweiligen Drahtdurchmesser ist so möglich.

Die Schnecken 2 der gezeigten Vorrichtung sind als Zylinderschnecken ausgestaltet. Die Schneckenräder 3 sind als Zylinderräder ausgestaltet. Es sind jedoch auch die Kombinationen Zylinderschnecke/Globoidrad, Globoidschnecke/Zylinderrad oder Globoidschnecke/Globoidrad möglich. Die Schneckenräder sind dabei bevorzugt schrägverzahnt.

Das Übersetzungsverhältnis von Schneckenrad 3 und Schnecke 2 ist bevorzugt etwa 1:40. Die Schneckenräder 3 sind dabei grösser als die Vorschubrollen 4. In der gezeigten Ausführungsform haben die Schneckenräder 3 einen Durchmesser von 60 mm und die Vorschubrollen 4 einen Durchmesser von 40 mm.

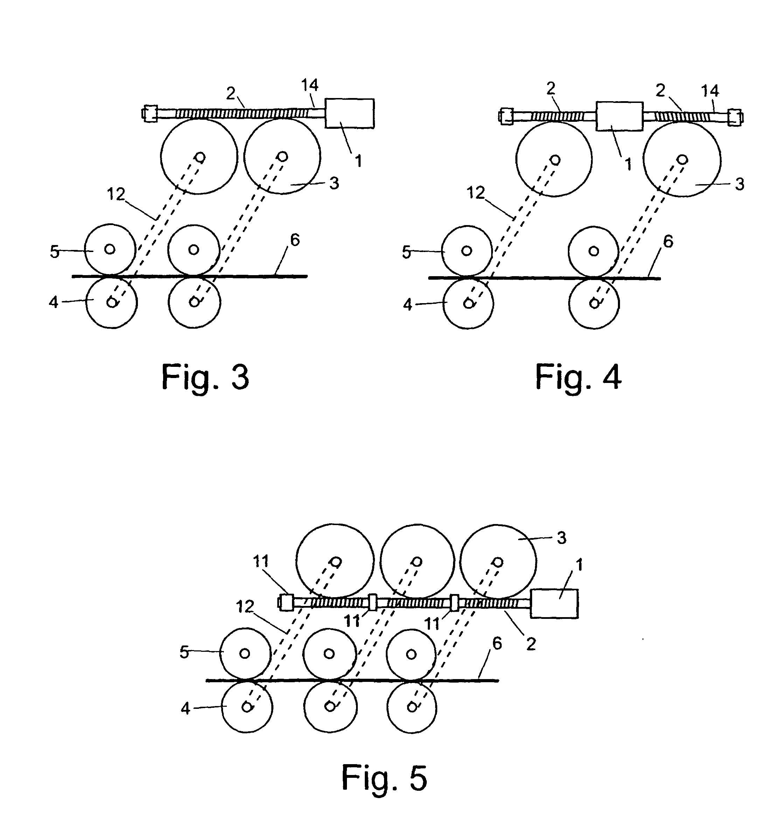

Figur 3 zeigt schematisch eine weitere Ausführungsform der erfindungsgemässen Vorschubvorrichtung. Die Rollenachsen 12 sind zur besseren Übersicht gestreckt dargestellt. Im Gegensatz zur Ausführung aus Figuren 1 und 2 befindet sich nur eine Schnecke 2 auf der Schnekkenachse 14, nur ist diese entsprechend länger. Zudem greift diese Schnecke 2 von oben, und nicht wie bei Fig. 1 von unten in die Schneckenräder 3. Die Schnecke 2 berührt damit jede Anordnung einer Rolle 4 und eines zugeordneten Schneckenrades 3 tangential von derselben Seite wie der Schweissdraht 6. Der Aufbau mit nur einer Schnekke 2 ist kostengünstiger. Eine weitere Reduktion der Anzahl benötigter Teile wird erreicht, wenn die Schnecke 2, die Schneckenachse 14 und eventuell die Antriebswelle des Motors 1 als ein Teil ausgebildet sind. Für den Aufbau, bei dem eine Schnecke 2 mit mehreren Schneckenrädern 3 in Kraftkontakt steht eignet sich bevorzugt eine Zylinderschnecke. Drahtvorschubvorrichtungen können insbesondere ein, zwei, drei oder vier angetriebene Rollen 4 aufweisen. Für jede dieser angetriebenen Rollen 4 ist eine Antriebsverbindung mit dem Motor 1, insbesondere über je ein Schneckenrad 3 erforderlich. Die Schneckenräder 3 werden von mindestens einer Schnecke 2 angetrieben. Wird jedem Schneckenrad 3 eine eigene Schnecke 2 zugeordnet, so kann die Anordnung insgesamt eins, zwei, drei oder vier Schnecken 2 aufweisen.

Figur 4 zeigt schematisch eine weitere Ausführungsform der erfindungsgemässen Vorschubvorrichtung. Im Gegensatz zur Ausführung aus Figuren 1 und 2 befindet sich der Motor in der Mitte der Schneckenachse 14, und nicht wie bei Fig. 1, 2 und 3 an einem Ende.

Figur 5 zeigt schematisch eine weitere Ausführungsform der erfindungsgemässen Vorschubvorrichtung. Im Gegensatz zur Ausführung aus Figuren 1 und 2 sind insgesamt sechs Rollen 4, 5 vorgesehen. Drei davon sind angetrieben. Die Schneckenachse 14 ist nicht nur am Ende mit Lager 11 gelagert, sondern es sind zwei weitere Lager 11 zwischen den Schneckenrädern 3 vorgesehen.

## Patentansprüche

1. Drahtvorschubvorrichtung für Drahtschweissanlagen, welche zum Antrieb des Schweissdrahtes (6) Rollen (4, 5) aufweist, zwischen welchen der Schweissdraht (6) führbar ist, wobei mindestens zwei Rollen (4) mit einem Motor (1) antriebsverbunden sind und eine mit dem Motor (1) antriebsverbundene Schneckenachse (14) vorgesehen ist, **dadurch gekennzeichnet, dass** mindestens zwei der angetriebenen Rollen (4) mit je einem Schneckenrad (3) fest verbunden sind und auf der Schneckenachse (14) mindestens eine Schnecke (2) angeordnet ist, wobei jedes der Schnekkenräder (3) mit der Schnecke (2) oder gegebenenfalls einer der Schnecken (2) in Kraftkontakt steht.

2. Drahtvorschubvorrichtung gemäss Anspruch 1, **dadurch gekennzeichnet, dass** mindestens eine angetriebene Rolle (4) über eine Rollenachse (12) mit dem zugehörigen Schneckenrad (3) fest verbunden ist, wobei die Rollenachse (12) insbesondere an zwei Punkten und insbesondere mit Kugellagern (9, 10) gelagert ist.

3. Drahtvorschubvorrichtung gemäss einem der vorhergehenden Ansprüche, **dadurch gekennzeichnet, dass** der Motor (1) eine Antriebswelle aufweist und dass die Antriebswelle die Schneckenachse (14) bildet.

4. Drahtvorschubvorrichtung gemäss Anspruch 3, **dadurch gekennzeichnet, dass** der Motor (1) zwischen zwei Schnecken (2) angeordnet ist.

5. Drahtvorschubvorrichtung gemäss einem der vorhergehenden Ansprüche, **dadurch gekennzeichnet, dass** die Schneckenachse (14) gelagert ist, insbesondere an den Enden, und insbesondere mit Bronzebüchsen (11).

6. Drahtvorschubvorrichtung gemäss einem der vorhergehenden Ansprüche, **dadurch gekennzeichnet, dass** vier, sechs oder acht Rollen (4, 5) vorgesehen sind und insbesondere zwei, drei oder vier der Rollen (4, 5) mit dem Motor (1) antriebsverbunden sind.

7. Drahtvorschubvorrichtung gemäss einem der vorhergehenden Ansprüche, **dadurch gekennzeichnet, dass** die Schneckenachse (14) ein, zwei, drei oder vier Schnekken (2) aufweist und eine Schnecke (2) insbesondere mit ein, zwei, drei oder vier Schneckenrädern (3) in Kraftkontakt steht.

8. Drahtvorschubvorrichtung gemäss einem der vorhergehenden Ansprüche, **dadurch gekennzeichnet, dass** die Anordnung einer Rolle (4) und des zugeordneten Schneckenrades (3) sowohl vom Schweissdraht (6), als auch von der Schnecke (2) von derselben Seite tangential berührt wird.

9. Drahtvorschubvorrichtung gemäss einem der vorhergehenden Ansprüche, **dadurch gekennzeichnet, dass** mindestens ein Schneckenrad (3) ein Zylinder-Schneckenrad oder ein Globoid-Schneckenrad ist, und insbesondere eine schräge Verzahnung aufweist.

10. Drahtvorschubvorrichtung gemäss einem der vorhergehenden Ansprüche **dadurch gekennzeichnet, dass** mindestens eine Schnecke (2) eine Zylinder-Schnecke oder eine Globoid-Schnecke ist.

11. Drahtvorschubvorrichtung gemäss einem der vorhergehenden Ansprüche **dadurch gekennzeichnet, dass** Schnecke (2) und Schneckenräder (3) in einem Gehäuse (7) angeordnet sind, und dieses insbesondere Schnecke (2) und Schneckenräder (3) von den Rollen (4) trennt.

12. Drahtvorschubvorrichtung gemäss Anspruch 11, **dadurch gekennzeichnet, dass** im Gehäuse (7) ein Ölbad vorgesehen ist, in das insbesondere die Schneckenräder (3) eintauchen.

13. Drahtvorschubvorrichtung gemäss Anspruch 11, **dadurch gekennzeichnet, dass** Schnecken (2) und Schneckenräder (3) gefettet sind.

14. Drahtvorschubvorrichtung gemäss einem der vorhergehenden Ansprüche **dadurch gekennzeichnet, dass** für jedes Schneckenrad (3) eine Schnecke (2) vorgesehen ist.

## Claims

1. Wire feeding device for wire welding installations, which comprises rollers (4, 5) for driving the welding wire (6), between which the welding wire (6) can be conducted, wherein at least two rollers (4) are drivingly connected with a drive (1) and a worm axle (14) drivingly connected with the drive (1) is provided, **characterised in that** at least two of the driven rollers (4) are each fixedly connected with a worm wheel (3) and at least one worm (2) is arranged on the worm axle (14), wherein each of the worm wheels (3) is in force contact with the worm (2) or, as the case may be, one of the worms (2).

2. Wire feeding device according to claim 1, **characterised in that** at least one driven roller (4) is fixedly connected over a roller.axle (12) with the worm wheel (3) belonging to it, wherein the roller axle (12) is supported at two points and in particular with ball bearings (9, 10).

3. Wire feeding device according to one of the preceding claims, **characterised in that** the drive (1) comprises a drive shaft and that the drive shaft forms the worm axle (14).

4. Wire feeding device according to claim 3, **characterised in that** the drive (1) is arranged between two worms (2).

5. Wire feeding device according to one of the preceding claims, **characterised in that** the worm axle (14) is supported, in particular at the ends, and in particular with bronze bushings (11).

6. Wire feeding device according to one of the preceding claims, **characterised in that** four, six or eight rollers (4, 5) are provided and in particular two, three or four of the rollers (4, 5) are drivingly connected with the drive (1).

7. Wire feeding device according to one of the preceding claims, **characterised in that** the worm axle (14) comprises one, two, three or four worms (2) and one worm (2) is in force contact in particular with one, two, three or four worm wheels (3).

8. Wire feeding device according to one of the preceding claims, **characterised in that** the arrangement of a roller (4) and the assigned worm wheel (3) is contacted by the welding wire (6) as well as the worm (2) tangentially from the same side.

9. Wire feeding device according to one of the preceding claims, **characterised in that** at least one worm wheel (3) is a cylindrical worm wheel or a globoid worm wheel and in particular comprises an angular cogging.

10. Wire feeding device according to one of the preceding claims, **characterised in that** at least one worm (2) is a cylindrical worm or a globoid worm.

11. Wire feeding device according to one of the preceding claims, **characterised in that** worm (2) and worm wheels (3) are arranged in a casing (7) which in particular separates worm (2) and worm wheels (3) from the rollers (4).

12. Wire feeding device according to claim 11, **characterised in that** in the casing (7) an oil bath is provided, which in particular the worm wheels (3) dip into.

13. Wire feeding device according to claim 11, **characterised in that** the worms (2) and the worm wheels (3) are greased.

14. Wire feeding device according to one of the preceding claims, **characterised in that** for each worm wheel (3) a worm (2) is provided.

## Revendications

1. Dispositif d'avance de fils pour des installations de soudage par fil qui a, pour entraîner le fil (6) de soudage, des galets (4, 5) entre lesquels le fil (6) de soudage peut passer, au moins deux galets (4) étant reliés en entraînement à un moteur (1), et il est prévu un axe (14) de vis relié en entraînement au moteur (1), **caractérisé en ce qu'**au moins deux des galets (4) entraînés sont solidaires, respectivement, d'une roue (3) à denture hélicoïdale et au moins une vis (5) est disposée sur l'axe (14) de la vis, chacune des roues (3) à denture hélicoïdale étant en contact de force avec la vis (2) ou, le cas échéant, avec l'une des vis (2).

2. Dispositif d'avance de fils suivant la revendication 1, **caractérisé en ce qu'**au moins un galet (4) entraîné est solidaire par un axe (12) de galet de la roue (3) à denture hélicoïdale associée, l'axe (12) du galet étant monté en deux points et notamment par des roulements (9, 10) à billes.

3. Dispositif d'avance de fils suivant l'une des revendications précédentes, **caractérisé en ce que** le moteur (1) a un arbre d'entraînement et **en ce que** l'arbre d'entraînement forme l'axe (14) de la vis.

4. Dispositif d'avance de fils suivant la revendication 3, **caractérisé en ce que** le moteur (1) est disposé entre deux vis (2).

5. Dispositif d'avance de fils suivant l'une des revendications précédentes, **caractérisé en ce que** l'axe (14) de la vis est monté notamment aux extrémités et notamment par des douilles (11) en bronze.

6. Dispositif d'avance de fils suivant l'une des revendications précédentes, **caractérisé en ce qu'**il est prévu quatre, six ou huit rouleaux (4, 5) et notamment deux, trois ou quatre des galets (4, 5) sont reliés en entraînement au moteur (1).

7. Dispositif d'avance de fils suivant l'une des revendications précédentes, **caractérisé en ce que** l'axe (14) de la vis a une, deux, trois ou quatre vis (2) et une vis (2) est en contact de force notamment avec une, deux, trois ou quatre roues (3) à denture hélicoïdale.

8. Dispositif d'avance de fils suivant l'une des revendications précédentes, **caractérisé en ce que** l'agencement d'un galet (4) et de la roue (3) à denture hélicoïdale associée est touché tangentiellement tant par le fil (6) de soudage que par la vis (2) du même côté.

9. Dispositif d'avance de fils suivant l'une des revendications précédentes, **caractérisé en ce qu'**au moins une roue (3) à denture hélicoïdale est une roue à vis cylindrique ou une roue à vis globique et a, notamment, une denture inclinée.

10. Dispositif d'avance de fils suivant l'une des revendications précédentes, **caractérisé en ce qu'**au moins une vis (2) est une vis cylindrique ou une vis globique.

11. Dispositif d'avance de fils suivant l'une des revendications précédentes, **caractérisé en ce que** la vis (2) et les roues (3) à denture hélicoïdale sont disposées dans un carter (7) et celui-ci sépare notamment la vis (2) et les roues (3) à denture hélicoïdale des galets (4).

12. Dispositif d'avance de fils suivant la revendication 11, **caractérisé en ce qu'**il est prévu, dans le carter (7), un bain d'huile, dans lequel plongent notamment les roues (3) à denture hélicoïdale.

13. Dispositif d'avance de fils suivant la revendication 11, **caractérisé en ce que** des vis (2) et des roues (3) à denture hélicoïdale sont graissées.

14. Dispositif d'avance de fils suivant l'une des revendications précédentes, **caractérisé en ce qu'**une vis (2) est prévue pour chaque roue (3) à denture hélicoïdale.
